# EUROPEAN PATENT APPLICATION

(11) **EP 1 482 506 A2**
(43) Date of publication of application: **01.12.2004**
(21) Application number: 04012354.9
(22) Date of filing: 25.05.2004
(51) Int. Cl.: G11B 23/03

(54) **Cartridge for storage medium**

(30) Priority: 31.05.2003 KR 2003035041
(71) Applicant: Daewoo Electronics Corporation, Seoul (KR)
(72) Inventor: Park, Joo-Youn, c/o Daewoo Electr. Corp., Seoul (KR)
(74) Representative: Turi, Michael, Dipl.-Phys.

(57) **Abstract**

In a cartridge (100) for a storage medium, a storing part installed at the cartridge stores therein contents of data stored in the storage medium. A recorder is used for inputting the contents of data to the storing part. A display part (130) installed at the cartridge displays thereon the contents of data stored in the storage medium. A control part (110) controls the storing part and the display part. A power supply part (140) supplies electric power to the control part.

## Description

The present invention relates to a cartridge for a storage medium; and, more particularly, to a cartridge for a storage medium capable of easily recording therein contents of data stored in the storage medium and detecting the contents of data therefrom.

Generally, a floppy disk, a hard disk drive, a digital versatile disk (DVD) or the like has been used as a storage medium for storing data. Further, along with a recent trend for a large capacity of data to be stored, a large capacity storage medium such as a HDDS (holographic digital data storage) disk becomes in the spotlight.

Such storage mediums include a cartridge serving as a case surrounding an inner recording medium such as a magnetic disk, an optical disk and the like, wherein the cartridge protects the inner recording medium from an exterior impact and prevents a foreign substance such as dirt particles from being in contact with the inner recording medium. In case of the HDDS disk being currently in the spotlight, a cartridge for the HDDS disk can not only protect an inner recording medium made of a light-sensitive material from the aforementioned exterior impact and the foreign substance but also prevent the inner recording medium from being exposed to light.

Further, the cartridge for the storage medium has been served as a device for recording contents of data stored in the storage medium. In other words, in order to easily understand the contents of data stored in the storage medium after storing data in the storage medium, a user has recorded the contents of data on a surface of the cartridge by using a writing instrument, e.g., an oil-based pen, or a paper such as an index label which is stuck on the surface of the cartridge.

In this case, however, as data stored in the storage medium is updated, the user should record new contents of updated data on a recording space, e.g., the surface of the cartridge or the paper thereon. Further, in case data stored in the storage medium is iteratively updated, the user should also iteratively record the contents thereof, resulting in an insufficient recording space on the cartridge. In such case, the user is not able to record the contents of newly updated data, so that the user feels inconvenient.

Especially, in case of the large capacity storage medium such as the HDDS disk, approximately hundreds of gigabytes to a few terabytes can be stored in one disk, so that data of various contents can be stored. In this case, the user may not record every contents of data stored on the recording space on the cartridge.

Consequently, the user is not able to easily detect the desired data stored in the storage medium through the recording space on the cartridge of the storage medium. Therefore, the user should check the contents of data stored in each storage medium by repeatedly inserting the storage medium into a driving device of the storage medium such as a PC to search for a specific storage medium having therein desired data, which causes the user the inconvenience.

It is, therefore, an object of the present invention to provide a cartridge for a storage medium, which is capable of displaying thereon contents of data stored in the storage medium and easily updating the contents of data depending on a change of data.

In accordance with the present invention, there is provided a cartridge for a storage medium, including: a storing part for storing therein contents of data stored in the storage medium; a recorder for inputting the contents of data to the storing part; a display part for displaying thereon the contents of data stored in the storage medium; a control part for controlling the storing part and the display part; and a power supply part for supplying electric power to the control part.

The above and other objects and features of the present invention will become apparent from the following description of preferred embodiments, given in conjunction with the accompanying drawings, in which:
Fig. 1A schematically shows a front view of a cartridge for a storage medium in accordance with a preferred embodiment of the present invention;
Fig. 1B schematically illustrates a rear view of the cartridge for the storage medium in accordance with the preferred embodiment of the present invention; and
Fig. 2 describes a block diagram in accordance with the present invention, which is able to display thereon contents of data stored in the storage medium.

Hereinafter, a preferred embodiment of the present invention will be described with reference to the accompanying drawings.

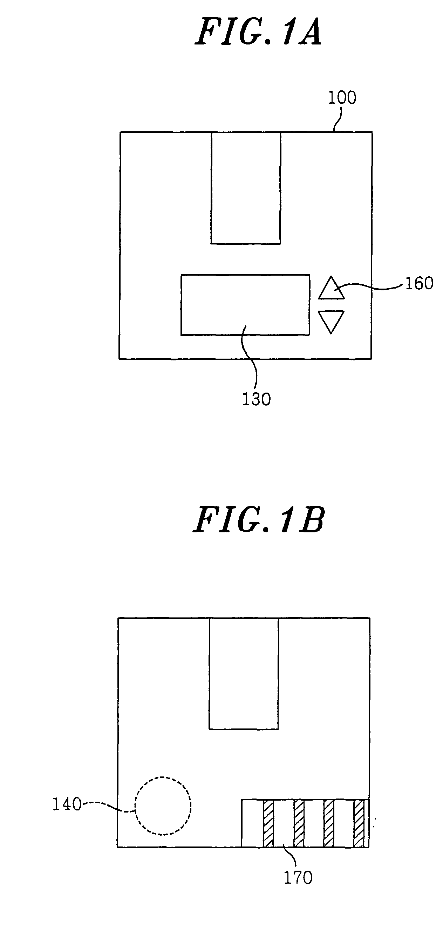

Figs. 1A and 1B schematically show a front view and a rear view of a cartridge for a storage medium in accordance with a preferred embodiment of the present invention, respectively. Hereinafter, a structure of the cartridge for the storage medium will be described.

As shown in Fig. 1A, the storage medium includes a cartridge 100 for protecting an inner recording medium such as a magnetic disk or an optical disk from an exterior impact, dirt particles and the like. Installed at a front surface of the cartridge 100 are a display part 130 and scroll buttons 160.

The display part 130 displays thereon contents of data that is inputted by a user and then stored in the storage medium. A light emitted device (LED), a liquid crystal display (LCD) or the like can be used serving as the display part 130 for displaying thereon the contents of data. The scroll buttons 160 for scrolling the contents of data displayed on the display part 130 include two buttons for respectively controlling an upward scroll and a downward scroll. In case the amount of the inputted contents is so huge that every content cannot be simultaneously displayed on the display part 130, the user can detect desired contents by scrolling upward or downward the inputted contents of data on the display part 130 by way of pushing the scroll buttons 169. In this case, the displayed contents may be scrolled left and right as well as upward and downward.

As shown in Fig. 1B, a power supply part 140 and a connecting part 170 are installed at a rear surface of the cartridge 100. The power supply part 140 supplies electric power to the display part 130 of the cartridge 100 to thereby display the contents of the stored data on the display part 130. In a preferred embodiment, a rechargeable battery can be used serving as the power supply part 140. Further, a solar battery can be used serving as the power supply part 140. In this case, the power supply part 140 can be more easily recharged and supply electric power to the cartridge.

In the preferred embodiment of the present invention, the connecting part 170 is provided at the rear surface of the cartridge 100. In case the cartridge 100 of the storage medium is installed at a driving device (not shown) of the storage medium such as a PC, the connecting part 170 is connected to a connecting unit (not shown) installed at the driving device. The connecting part 170 of the cartridge 100 has a plurality of connecting terminals, wherein a part of the connecting terminals (hereinafter, referred to as "power supply terminal") is electrically connected to an external power supply (not shown) for supplying electric power to the driving device via the connecting unit. Accordingly, a part of the external power supply for supplying electric power to the driving device is provided to the power supply part 140 of the cartridge 100 via the power supply terminal, thereby the power supply part 140 being recharged.

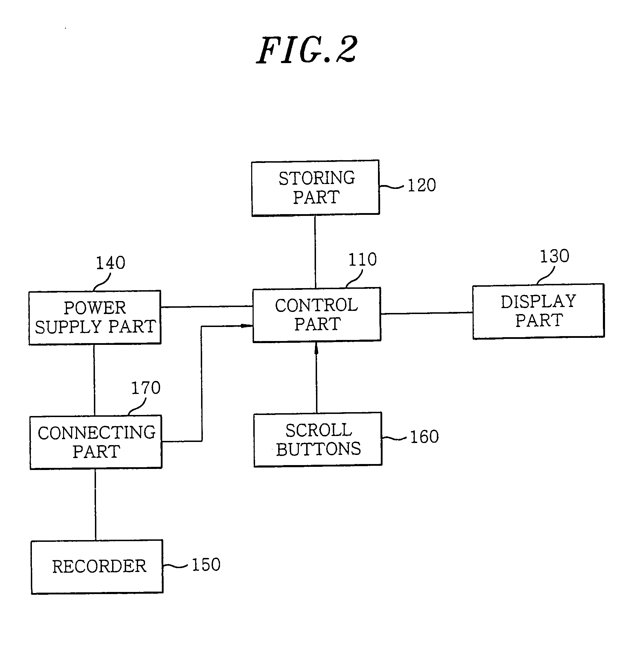

In order to display the contents of data stored in the storage medium, the cartridge 100 includes a control part 110, a storing part 120, the display part 130, the power supply part 140, a recorder 150, the scroll buttons 160 and the connecting part 170, as illustrated in Fig. 2.

The control part 110 controls the storing part 120 to store therein the contents of data inputted by the recorder 150 and the display part 130 to display thereon the contents of stored data depending on an operation of the user. In this case, a micom can be used as the control part 110. The storing part 120, i.e., a memory for storing inputted contents, stores therein the contents of data that is inputted by the recorder 150 and then stored in the storage medium. At this time, it is preferable to use a flash memory, i.e., an inactive memory, as the storing part 120 so that the stored contents can be preserved even in case electric power supplied from the power supply part 140 is cut off, e.g., when a rechargeable battery is completely discharged due to a nonuse of the cartridge 100 for a long time.

The recorder 150 is used for a user to input the contents of data to the storing part 120 via the control part 110. In a more preferred embodiment, as shown in Fig. 2, the recorder 150 is connected to the driving device of the storage medium via the connecting part 170. Therefore, the inputted contents of data are inputted to the control part 110 via a part of the connecting terminals (hereinafter, referred to as "recorder terminal") of the connecting part 170.

In this case, the recorder 150 can be a keyboard or a remote control linked to the driving device such as a PC. In case the remote control is used as the recorder 150, the remote control is provided with a character string pad so that characters, signs and the like can be inputted. By using such character string pad, the user can input the contents of data to be recorded in a disk. However, the recorder 150 must be not necessarily linked to the driving device, it may be directly connected to the cartridge 100.

Further, as described above, the user can vertically scroll the contents of data displayed on the display part 130 by operating the scroll buttons 160. At this time, in order to prevent the power supply part 140 from being discharged in a short time, if there is no input to the control part 110 by the scroll buttons 160 for a predetermined period of time, the control part 110 turns off the display part 130 so that the contents of data can be not displayed thereon. Later, if the user operates the scroll buttons 160 to detect the contents of data, the control part 110 turns on the display part 130 so that the stored contents of data can be displayed thereon.

As described above, the present invention provides the cartridge for the storage medium, which is capable of displaying the contents of data stored in the storage medium and easily updating the contents depending on a change of stored data, thereby increasing the convenience of a user who desires to detect data.

While the invention has been shown and described with respect to the preferred embodiments, it will be understood by those skilled in the art that various changes and modifications may be made without departing from the scope of the invention as defined in the following claims.

## Claims

1. A cartridge for a storage medium comprising:
a storing part for storing therein contents of data stored in the storage medium;
a recorder for inputting the contents of data to the storing part;
a display part installed for displaying thereon the contents of data stored in the storage medium;
a control part for controlling the storing part and the display part; and
a power supply part for supplying electric power to the control part.

2. The cartridge for a storage medium of claim 1, further including scroll buttons connected to the control part, for scrolling the contents displayed on the display part.

3. The cartridge for a storage medium of claim 2, wherein the control part turns off the display part in case the scroll buttons are not operated for a predetermined period of time and turns on the display part in case the scroll buttons are operated.

4. The cartridge for a storage medium of claim 1, wherein the cartridge further includes a connecting part for connecting the cartridge with a driving device of the storage medium, and wherein the recorder is a keyboard or a remote control installed at the driving device of the storage medium.

5. The cartridge for a storage medium of claim 1, wherein the power supply part is rechargeable.

6. The cartridge for a storage medium of claim 5, wherein the cartridge further includes a connecting part for connecting an external power supply for supplying electric power to a driving device of a storage medium with the power supply part, and wherein the power supply part is recharged by the external power supply in case the cartridge is installed at the driving device.
